# EUROPÄISCHE PATENTSCHRIFT

(11) **EP 1 480 060 B1**
(45) Veröffentlichungstag und Bekanntmachung des Hinweises auf die Patenterteilung: **06.03.2013**
(21) Anmeldenummer: 04009471.6
(22) Anmeldetag: 22.04.2004
(51) Int. Cl.: G01V 8/10

(54) **Optischer Sensor**
Optical sensor
Capteur optique

(30) Priorität: 23.05.2003 DE 10323324
(43) Veröffentlichungstag der Anmeldung: 24.11.2004
(73) Patentinhaber: Leuze electronic GmbH + Co. KG, 73277 Owen/Teck (DE)
(72) Erfinder: Haberer, Hermann, 81379 München (DE); Hartl, Paul, 80797 München (DE); Parstorfer, Bernhard, 80637 München (DE); Rohbeck, Volker, Dr., 85244 Röhrmoos (DE)
(74) Vertreter: Ruckh, Rainer Gerhard

(56) Entgegenhaltungen:
- EP-A2- 1 298 449
- EP-B1- 0 605 496
- DE-C1- 19 917 509
- DE-C1- 19 951 165
- US-A- 5 444 264

## Beschreibung

Die Erfindung betrifft einen optischen Sensor gemäß dem Oberbegriff des Anspruchs 1.

Derartige optische Sensoren werden insbesondere im Bereich der Sicherheitstechnik eingesetzt und dienen zur Überwachung von Gefahrenbereichen von Arbeitsgeräten wie zum Beispiel Abkantpressen, Robotern, fahrerlosen Transportsystemen.

Mit dem vom optischen Sensor erfassten Überwachungsbereich wird der Gefahrenbereich an einem derartigen Arbeitsgerät überwacht. Dringt ein Objekt oder eine Person in den Überwachungsbereich ein, wird in der Auswerteeinheit des optischen Sensors ein entsprechendes Schaltsignal mit einem vorgegebenen Schaltzustand generiert, welches über einen Sicherheitsschaltausgang ausgegeben wird. Mit dem Schaltsignal wird das Arbeitsgerät abgeschaltet, das heißt deaktiviert, um eine Gefährdung von Personen auszuschließen. Liegt dagegen kein Eingriff in den Überwachungsbereich vor, so nimmt das Schaltsignal einen zweiten Schaltzustand ein, so dass das Arbeitsgerät eingeschaltet, das heißt aktiviert ist.

Bei stationären Anwendungen zur Sicherung von Arbeitsgeräten werden insbesondere als Lichtgitter ausgebildete optische Sensoren eingesetzt. Ein derartiges Lichtgitter ist aus der DE 39 39 191 A1 bekannt. Dieses Lichtgitter besteht aus einer Anordnung von in Abstand gegenüberliegenden Sender- und Empfängerpaaren, welche die Strahlachsen des Lichtgitters bilden. Die Strahlachsen des Lichtgitters ergänzen sich zu einem in einer Ebene verlaufenden Überwachungsbereich. Bei einem freien Überwachungsbereich ist keine der Strahlachsen unterbrochen, so dass die von den Sendern emittierten Sendelichtstrahlen ungehindert auf die zugeordneten Empfänger treffen. In der Auswerteeinheit wird dann ein Schaltsignal generiert, mittels dessen das Arbeitsgerät aktiviert wird. Tritt ein Objekt oder eine Person in den Überwachungsbereich, so wird wenigstens eine Strahlachse unterbrochen. Darauf ändert sich der Schaltzustand des Schaltsignals. Das so geänderte, über den Sicherheitsschaltausgang ausgegebene Schaltsignal deaktiviert das Arbeitsgerät.

Bei stationären und insbesondere auch bei mobilen Anwendungen werden zur Gefahrenbereichsabsicherung insbesondere auch als Flächendistanzsensoren ausgebildete optische Sensoren eingesetzt. Ein derartiger Flächendistanzsensor ist aus der DE 19 917 509 C1 bekannt. Der Flächendistanzsensor besteht im Wesentlichen aus einem Distanzsensor mit einem Sendelichtstrahlen emittierenden Sender und einem Empfangslichtstrahlen empfangenden Empfänger. Die Distanzmessung erfolgt dabei nach dem Laufzeitverfahren, das heißt es wird die Lichtlaufzeit der zu einem Objekt geführten Sendelichtstrahlen und von diesem zurückreflektierten Empfangslichtstrahlen bestimmt. Zur Erfassung von Objekten innerhalb eines Überwachungsbereichs werden die vom Sender emittierten Sendelichtstrahlen mittels einer Ablenkeinheit periodisch abgelenkt.

In der Auswerteeinheit ist eine vorgegebene Anzahl von Schutzfeldern abgespeichert, welche jeweils ein bestimmtes Segment des Überwachungsbereichs definieren. Vor Inbetriebnahme des Flächendistanzsensors ist ein Schutzfeld auswählbar. Wird daraufhin ein Objekt oder eine Person innerhalb dieses Schutzfeldes erkannt, wird über den Schaltausgang des Flächendistanzsensors ein Schaltsignal ausgegeben, durch welches ein Arbeitsgerät deaktiviert wird.

Mit derartigen optischen Sensoren können weitere sicherheitsrelevante Signale generiert werden, die beispielsweise zur Steuerung von dem Arbeitsgerät zugeordneten Komponenten benötigt werden.

Prinzipiell könnten am optischen Sensor weitere Sicherheitsschaltausgänge vorgesehen werden, über welche derartige sicherheitsrelevante Signale ausgegeben werden. Nachteilig hierbei ist jedoch, dass derartige Sicherheitsschaltausgänge einen hohen Schaltungsaufwand und damit auch einen unerwünscht hohen Kostenaufwand bedingen.

Die DE 199 17 509 C1 betrifft eine optoelektronische Vorrichtung zum Erfassen von Objekten in einem Überwachungsbereich mit einem Distanzsensor, welcher einen Sendelichtstrahlen emittierenden Sender und einen Empfangslichtstrahlen empfangenden Empfänger aufweist, einer Auswerteeinheit zur Auswertung der am Empfänger anstehenden Empfangssignale und einer Ablenkeinheit, an welcher die Sendelichtstrahlen abgelenkt werden, so daß diese periodisch den Überwachungsbereich überstreichen. In der Auswerteeinheit sind die Abmessungen verschiedener Überwachungsbereiche abgespeichert. Mehrere Schalter sind über jeweils eine Zuleitung an einen Eingang der Auswerteeinheit angeschlossen, wobei jedem Eingang ein abgespeicherter Überwachungsbereich zugeordnet ist. Durch Betätigen eines Schalters steht am zugeordneten Eingang ein vorgegebener Signalwert an, welcher einer Aktivierung des Eingangs entspricht. Dadurch wird der zugeordnete abgespeicherte Überwachungsbereich aktiviert, wodurch die Objekte in diesem Überwachungsbereich erfaßt werden. Zu Testzwecken ist über einen Ausgang A der Auswerteeinheit auf die Zuleitungen jeweils ein vorgegebener Signalwert ausgebbar ist, welcher im fehlerfreien Fall an dem entsprechenden Eingang der Auswerteeinheit ansteht.

Der Erfindung liegt die Aufgabe zugrunde, einen optischen Sensor der eingangs genannten Art bereitzustellen, bei welchem mit möglichst geringem Schaltungs- und Kostenaufwand eine sichere Generierung und Ausgabe von Signalen ermöglicht wird.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Der erfindungsgemäße optische Sensor dient zur Erfassung von Objekten in einem Überwachungsbereich und weist wenigstens einen Sendelichtstrahlen emittierenden Sender, wenigstens einen Empfangslichtstrahlen empfangenden Empfänger und eine Auswerteeinheit auf, in welcher in Abhängigkeit der Empfangssignale am Ausgang des Empfängers ein Schaltsignal generiert wird, welches über wenigstens einen Sicherheitsschaltausgang zur Steuerung eines Arbeitsgerätes ausgegeben wird. In der Auswerteeinheit wird wenigstens ein Meldesignal generiert, an wenigstens einen einkanaligen Meldeausgang ausgelesen und über diesen ausgegeben. Das Meldesignal wird in die Auswerteeinheit rückgelesen und dort mit vorgegebenen Sollwerten verglichen. Bei einer Abweichung der Istwerte von den Sollwerten wird in der Auswerteeinheit ein Deaktivierungssignal für den Sicherheitsschaltausgang und den Meldeausgang generiert. Das Deaktivierungssignal ist als Abschaltbefehl für den Meldeausgang und einen Ausgang ausgebildet. Der Ausgang bildet einen gemeinsamen Masseanschluss für den oder jeden Meldeausgang.

In einer besonders vorteilhaften Ausführungsform weist die Auswerteeinheit zwei Rechnereinheiten auf. In diesen Rechnereinheiten wird das Meldesignal generiert, welches dann von einer Rechnereinheit an den einkanaligen Meldeausgang ausgelesen und in beide Rechnereinheiten rückgelesen und dort mit vorgegebenen Sollwerten verglichen wird. Bei einer Abweichung der Istwerte von den Sollwerten wird in der Auswerteeinheit das Deaktivierungssignal für den Sicherheitsschaltausgang und/oder den Meldeausgang generiert.

Über den oder die Meldeausgänge können sicherheitsrelevante Meldesignale ausgegeben werden. Ein wesentlicher Vorteil der Erfindung besteht darin, dass der Meldeausgang eine einkanalige Struktur aufweist, wodurch der Kostenaufwand zur Ausbildung des Meldeausgangs gering gehalten wird. Das für die jeweilige Applikation erforderliche Sicherheitsniveau der Ausgabe der Meldesignale über den oder die Meldeausgänge wird durch das Rücklesen der Meldesignale in die Auswerteeinheit bzw. in deren Rechnereinheiten und den dort durchgeführten Vergleich dieser Meldesignale mit in den Rechnereinheiten berechneten und gespeicherten Sollwerten erreicht. Ein weiterer wesentlicher Bestandteil zur Erzielung des Sicherheitsniveaus ist das in der Auswerteeinheit generierte Deaktivierungssignal. Mit diesem Deaktivierungssignal wird einerseits wenigstens ein Schaltausgang abgeschaltet, das heißt das über den Schaltausgang ausgegebene Schaltsignal in einen Schaltzustand versetzt, welcher zur Deaktivierung des Arbeitsgeräts führt. Alternativ oder zusätzlich erfolgt mittels des Deaktivierungssignals ein Abschalten des Meldeausgangs. Dadurch ist gewährleistet, dass bei Auftreten eines Fehlers bei der Ausgabe eines Meldesignals der optische Sensor in einen sicheren Zustand übergeht.

Die so ausgebildete Schaltungsanordnung kann bei geringem Schaltungsaufwand auf eine Mehrfachanordnung von Meldeausgängen erweitert werden. Damit kann eine Vielzahl sicherheitsrelevanter Meldesignale mit dem geforderten Sicherheitsniveau am optischen Sensor ausgegeben werden.

Gemäß einer ersten Variante der Erfindung werden die Schaltzustände der Meldesignale mit den Schaltzuständen der Schaltsignale logisch verknüpft. Bei Auftreten eines Fehlers bei Ausgabe wenigstens eines Meldesignals wird wenigstens ein Schaltsignal in einen Schaltzustand versetzt, der zur Deaktivierung, das heißt zum Abschalten des Arbeitsgeräts führt. In diesem Fall wird die Sicherheit der Ausgabe der Meldesignale durch die entsprechende Beeinflussung der Schaltsignale an den Sicherheitsschaltausgängen erreicht, und zwar derart, dass im Fehlerfall bei der Ausgabe eines Meldesignals ein sicherer Zustand durch die Deaktivierung des Arbeitsgeräts hergestellt wird.

Gemäß einer zweiten Variante der Erfindung sind die Meldeausgänge auf einen gemeinsamen Masseanschluss bildenden Ausgang geführt. In diesem Fall müssen die Sicherheitsschaltausgänge zur Gewährleistung des Sicherheitsniveaus nicht zwingend in die Sicherheitsbeschaltung miteinbezogen werden. In diesem Fall ist das Deaktivierungssignal als Abschaltbefehl für den Meldeausgang, an welchem ein Ausgabefehler festgestellt wird, und für den Ausgang ausgebildet, so dass die Ausgabe fehlerhafter Meldesignale unterbunden wird. Alternativ oder zusätzlich kann über eine entsprechende Ansteuerung wenigstens eines Sicherheitsschaltausgangs auch eine Deaktivierung des Arbeitsgerätes erfolgen.

Eine mögliche Ausführungsform für ein derartiges Meldesignal ist ein Steuersignal für dem Arbeitsgerät zugeordnete Bedieneinheiten. Ein Beispiel für eine derartige Anordnung ist ein als Abkantpresse ausgebildetes Arbeitsgerät, dessen Vorfeld mit einem als Lichtgitter ausgebildeten optischen Sensor überwacht wird. Als Bedieneinheiten sind ein Fußpedalschalter und ein Zweihandpult vorgesehen, welche über eine Sicherheitssteuerung angesteuert werden.

Mit der Abkantpresse werden dünne ebene Bleche in vorgegebene Formteile gebogen. Befindet sich ein ebenes Blech im Strahlengang des Lichtgitters, liegt ein geringes Gefahrenpotential für die jeweilige Bedienperson vor, so dass diese über den Fußpedalschalter den Betrieb der Abkantpresse freigeben kann. Befindet sich dagegen ein gebogenes Blech im Strahlengang des Lichtgitters, so besteht durch Abschattungen von Strahlachsen des Lichtgitters durch das gebogene Blech die Gefahr, dass ein Eingriff der Bedienperson in den Gefahrenbereich von dem Lichtgitter nicht erkannt werden kann. Daher kann in diesem Fall die Freigabe der Abkantpresse nur über das Zweihandpult erfolgen.

Mit dem Lichtgitter wird in diesem Fall erkannt, ob ein ebenes oder ein gebogenes Blech im Strahlengang liegt. In Abhängigkeit der dabei generierten Empfangssignale wird in der Auswerteeinheit des Lichtgitters ein entsprechendes Meldesignal generiert und an die Sicherheitssteuerung ausgegeben. Die Schaltzustände des Meldesignals liefern der Sicherheitssteuerung als Information, ob sich ein ebenes oder gebogenes Blech im Strahlengang des Lichtgitters befindet. In Abhängigkeit dieses Meldesignals wird dann über die Sicherheitssteuerung entweder der Fußpedalschalter oder das Zweihandpult als Bedieneinheit für die Abkantpresse freigegeben.

Die Erfindung wird im Nachstehenden anhand der Zeichnungen erläutert. Es zeigen:
- Figur 1:: Schematische Darstellung eines als Lichtgitter ausgebildeten optischen Sensors.
- Figur 2:: Schematische Darstellung eines als Flächendistanzsensor ausgebildeten optischen Sensors.
- Figur 3:: Erstes Ausführungsbeispiel einer Ausgangsschaltung für die optischen Sensoren gemäß den Figuren 1 und 2.
- Figur 4:: Zweites Ausführungsbeispiel einer Ausgangsschaltung für die optischen Sensoren gemäß den Figuren 1 und 2.

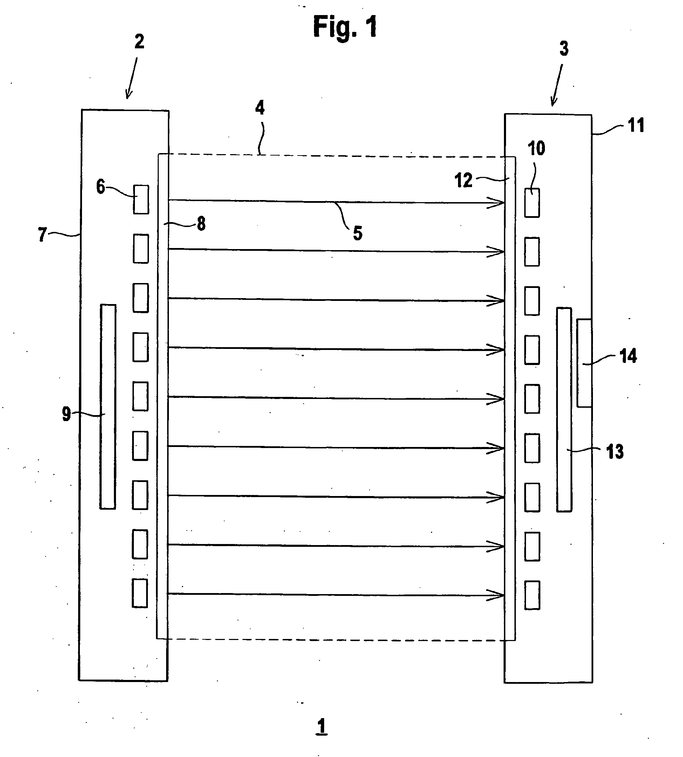

Figur 1 zeigt schematisch den Aufbau eines als Lichtgitter ausgebildeten optischen Sensors 1. Das Lichtgitter weist eine Sendereinheit 2 und eine Empfängereinheit 3 auf, welche beidseits eines Überwachungsbereichs 4 in Abstand gegenüberliegend angeordnet sind.

Die Sendereinheit 2 weist mehrere vertikal in Abstand angeordnete, Sendelichtstrahlen 5 emittierende Sender 6 auf, die in einem ersten Gehäuse 7 angeordnet sind. Die identisch ausgebildeten Sender 6 sind von Leuchtdioden gebildet und liegen hinter einem Fenster 8, durch welches die Sendelichtstrahlen 5 in den Überwachungsbereich 4 geführt sind. Zur Strahlformung der Sendelichtstrahlen 5 können den Sendern 6 nicht dargestellte Sendeoptiken nachgeordnet sein.

Die Ansteuerung der Sender 6 erfolgt über eine Sendersteuereinheit 9. Die Sendersteuereinheit 9 besteht aus einem Mikroprozessorsystem oder dergleichen. Die Sender 6 werden dabei zyklisch nacheinander aktiviert.

Die Empfängereinheit 3 weist mehrere vertikal in Abstand angeordnete Empfänger 10 auf, die in einem zweiten Gehäuse 11 angeordnet sind. Die identisch ausgebildeten Empfänger 10 sind von Photodioden gebildet und liegen hinter einem weiteren Fenster 12, durch welches die Sendelichtstrahlen 5 aus dem Überwachungsbereich 4 auf die Empfänger 10 geführt sind. Zur Fokussierung der Sendelichtstrahlen 5 auf die Empfänger 10 können den Empfängern 10 nicht dargestellte Empfangsoptiken vorgeordnet sein.

Die Auswertung der an den Ausgängen der Empfänger 10 anstehenden Empfangssignale erfolgt in einer Empfängersteuereinheit, welche die Auswerteeinheit 13 des optischen Sensors 1 bildet. Zudem dient die Empfängersteuereinheit zur Steuerung des Betriebs der Empfänger 10.

Wie aus Figur 1 ersichtlich entspricht die Anzahl der Sender 6 der Anzahl der Empfänger 10 des Lichtgitters. Dabei ist jeweils einem Sender 6 ein gegenüberliegender Empfänger 10 zugeordnet, auf welchen bei freiem Strahlengang die Sendelichtstrahlen 5 dieses Senders 6 auftreffen.

Jeder Sender 6 und der diesem zugeordnete Empfänger 10 bildet eine Strahlachse des Lichtgitters. Die Strahlachsen definieren den Überwachungsbereich 4, der im vorliegenden Fall in einer vertikalen Ebene verläuft. Über die Sendersteuereinheit 9 und die Empfängersteuereinheit werden die einzelnen- Strahlachsen einzeln nacheinander zyklisch aktiviert. Die Synchronisierung dieses Lichtgitterbetriebs erfolgt beispielsweise anhand den von dem ersten Sender 6 emittierten Sendelichtstrahlen 5, welchen eine individuelle Kodierung aufgeprägt ist, die sich von den Kodierungen der übrigen Sendelichtstrahlen 5 unterscheidet.

Generell kann der optische Sensor 1 gemäß Figur 1 auch derart abgewandelt sein, dass die Sender 6 und Empfänger 10 in einem gemeinsamen Gehäuse integriert sind, welches an einem Rand des Überwachungsbereiches 4 angeordnet ist. Bei freiem Strahlengang werden die von einem Sender 6 emittierten Sendelichtstrahlen 5 auf einen am gegenüberliegenden Rand des Überwachungsbereiches 4 angeordneten Reflektor geführt und von dort zurück zum zugeordneten Empfänger 10 reflektiert.

Das Lichtgitter wird insbesondere in sicherheitstechnischen Applikationen zur Gefahrenbereichsüberwachung an nicht dargestellten Arbeitsgeräten wie zum Beispiel Pressen eingesetzt. Hierzu weisen die Elektronikkomponenten, insbesondere die Auswerteeinheit 13, einen redundanten Aufbau auf.

Bei freiem Strahlengang des Lichtgitters treffen die Sendelichtstrahlen 5 sämtlicher Sender 6 ungehindert auf die zugeordneten Empfänger 10. Tritt ein Objekt oder eine Person in den Überwachungsbereich 4, so wird wenigstens eine Strahlachse des Lichtgitters zumindest teilweise unterbrochen. Ein derartiger Objekteingriff wird in der Auswerteeinheit 13 durch eine Schwellwertbewertung der Ausgangssignale der Empfänger 10 erfasst.

Der Auswerteeinheit 13 ist eine Ausgangsschaltung 14 zugeordnet. Über diese werden insbesondere Schaltsignale zur Steuerung eines nicht dargestellten Arbeitsgerätes ausgegeben.

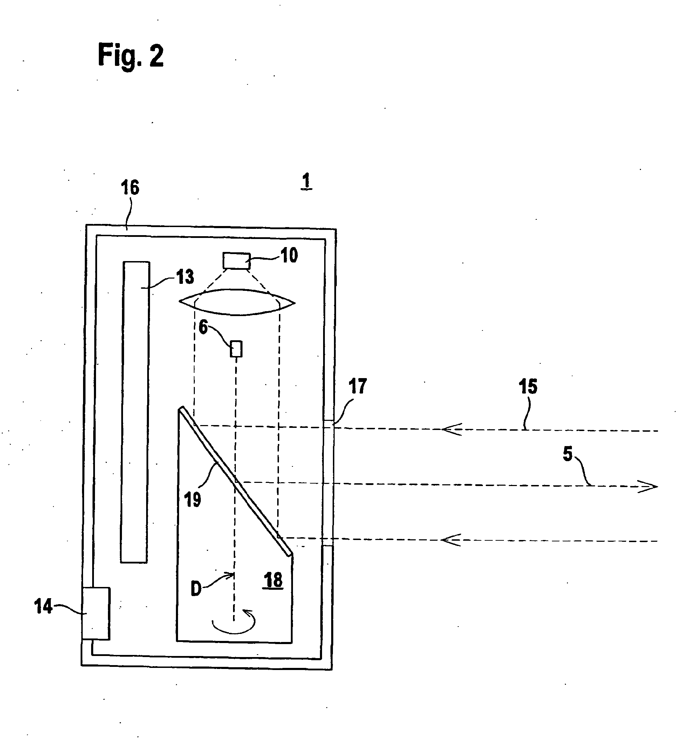

Figur 2 zeigt ein Ausführungsbeispiel eines als Flächendistanzsensor ausgebildeten optischen Sensors 1. Der Flächendistanzsensor weist einen nach dem Lichtlaufzeitverfahren arbeitenden Distanzsensor auf Der Distanzsensor besteht im Wesentlichen aus einem Sendelichtstrahlen 5 emittierenden Sender 6 und einem Empfangslichtstrahlen 15 empfangenden Empfänger 10. Der Sender 6 ist von einer Laserdiode gebildet, der Empfänger 10 besteht aus einer Photodiode. Zur Distanzmessung wird in der Auswerteeinheit 13 des optischen Sensors 1 die Lichtlaufzeit der vom Sender 6 emittierten, auf ein Objekt geführten Sendelichtstrahlen 5 und der vom Objekt reflektierten Empfangslichtstrahlen 15 ausgewertet.

Der optische Sensor 1 ist in einem Gehäuse 16 integriert. In der Frontwand des Gehäuses 16 befindet sich ein Fenster 17, durch welches die Sendelichtstrahlen 5 und die Empfangslichtstrahlen 15 geführt sind.

Der optische Sensor 1 weist zur periodischen Ablenkung der Sendelichtstrahlen 5 eine Ablenkeinheit 18 auf. Mittels der Ablenkeinheit 18 werden die Sendelichtstrahlen 5 innerhalb eines Winkelbereichs abgelenkt, der im vorliegenden Fall 180° beträgt. Die Ablenkeinheit 18 weist einen motorisch getriebenen, um eine Drehachse D drehbaren Spiegel 19 auf, über welchen die Sendelichtstrahlen 5 und die Empfangslichtstrahlen 15 geführt sind.

Wie aus Figur 2 ersichtlich verlaufen die Sendelichtstrahlen 5 und die Empfangslichtstrahlen 15 koaxial. Dabei sind die Sendelichtstrahlen 5 auf das Zentrum des Spiegels 19 geführt. Die von einem Objekt zurückreflektierten Empfangslichtstrahlen 15 werden an den Randbereichen des Spiegels 19 reflektiert und werden über eine Linse auf den Empfänger 10 fokussiert.

Durch die Drehbewegung des Spiegels 19 werden die Sendelichtstrahlen 5 in einer horizontalen Ebene geführt. Die Abmessungen des Fensters 17 definieren dabei den Winkelbereich, innerhalb dessen die Sendelichtstrahlen 5 in dieser Ebene geführt sind.

Dieser Winkelbereich sowie eine mit dem Distanzsensor noch erfassbare Maximaldistanz begrenzen den Überwachungsbereich 4, innerhalb dessen mit dem Flächendistanzsensor Objekte erfassbar sind.

Analog zur Ausführungsform gemäß Figur 1 weist der optische Sensor 1 gemäß Figur 2 eine der Auswerteeinheit 13 zugeordnete Ausgangsschaltung 14 auf, über welche insbesondere Schaltsignale zur Steuerung des Arbeitsgerätes ausgebbar sind.

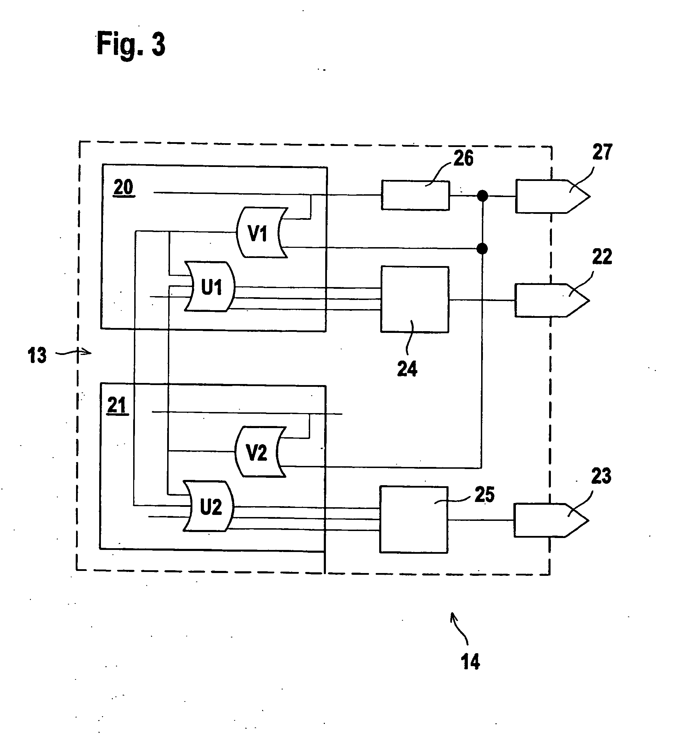

Figur 3 zeigt ein erstes Ausführungsbeispiel einer derartigen der Auswerteeinheit 13 zugeordneten Ausgangsschaltung 14. Die Auswerteeinheit 13 weist zur Erfüllung des insbesondere für den Einsatz des optischen Sensors 1 im Bereich des Personenschutzes notwendigen Sicherheitsniveaus einen redundanten Aufbau auf. Dabei besteht die Auswerteeinheit 13 im vorliegenden Fall aus zwei identisch ausgebildeten, sich gegenseitig kontrollierenden Rechnereinheiten 20, 21. Die Rechnereinheiten 20, 21 sind beispielsweise jeweils von einem Microcontroller gebildet.

Zur Gefahrenbereichsabsicherung an dem jeweiligen Arbeitsgerät wird mit dem optischen Sensor 1 fortlaufend der Überwachungsbereich 4 oder als Schutzfeld ein Teil dieses Überwachungsbereichs 4 überwacht. In Abhängigkeit der Auswertung der Empfangssignale des oder der Empfänger 10 wird in der Auswerteeinheit 13 ein binäres Schaltsignal mit den Schaltzuständen "low" und "high" generiert. Nur bei fehlerfreier Funktion des optischen Sensors 1 und bei freiem Überwachungsbereich 4 beziehungsweise freiem Schutzfeld nimmt das Schaltsignal den Schaltzustand "high" ein. Ansonsten nimmt das Schaltsignal den Schaltzustand "low" ein.

Das Schaltsignal wird im vorliegenden Fall über zwei Sicherheitsschaltausgänge 22, 23 zur Ansteuerung des Arbeitsgerätes ausgegeben. Dabei ist jeweils ein Sicherheitsschaltausgang 22, 23 an eine der Rechnereinheiten 20, 21 über jeweils eine Ansteuerstufe 24, 25 angeschlossen. Die Ansteuerstufen 24, 25 können von einem Transistor oder einer sonstigen Treiberschaltung gebildet sein. Die Sicherheitsschaltausgänge 22, 23 weisen entsprechend des geforderten Sicherheitsniveaus einen zweikanaligen Aufbau auf. Prinzipiell sind auch Konfigurationen mit einem Sicherheitsschaltausgang 22 bzw. 23 oder mehr als zwei Sicherheitsschaltausgängen 22, 23 denkbar, wobei die Sicherheitsschaltausgänge 22, 23 prinzipiell auch einen einkanaligen Aufbau aufweisen können.

Das an die Sicherheitsschaltausgänge 22, 23 angeschlossene Arbeitsgerät wird nur dann aktiviert, das heißt in Betrieb gesetzt, wenn über beide Sicherheitsschaltausgänge 22, 23 Schaltsignale mit dem Schaltzustand "high" ausgegeben werden. Ansonsten ist das Arbeitsgerät deaktiviert, das heißt außer Betrieb gesetzt, um Gefährdungen des Bedienpersonals zu vermeiden.

Wie aus Figur 3 ersichtlich ist an die erste Rechnereinheit 20 über einen Ausgangstreiber 26 ein Meldeausgang 27 angeschlossen.

Der Meldeausgang 27 besteht im Wesentlichen aus einer einkanaligen Leitung. Über den Meldeausgang 27 wird ein vorzugsweise binäres Meldesignal ausgegeben. Das Meldesignal kann beispielsweise aus den Empfangssignalen des oder der Empfänger 10 abgeleitet werden. Beispielsweise beinhaltet das Meldesignal Objektklassifikationen von mit dem optischen Sensor 1 detektierten Objekten. Weiterhin können über das Meldesignal Informationen über in dem optischen Sensor 1 abgespeicherte Schutzfelder beziehungsweise über in einzelnen Schutzfeldern detektierte Objekte ausgegeben werden.

Prinzipiell können an die Rechnereinheiten 20, 21 auch mehrere vorzugsweise identische Meldeausgänge 27a, 27b angeschlossen sein, über welche unterschiedliche Meldesignale ausgegeben werden können.

In beiden Rechnereinheiten 20, 21 werden die Schaltzustände des Meldeausgangs 27 berechnet, welche auch in beiden Rechnereinheiten 20, 21 als Sollwerte hinterlegt werden. Die Ausgabe des Meldesignals erfolgt jedoch nur über eine Rechnereinheit 20, den Ausgangstreiber 26 und den angeschlossenen Meldeausgang 27.

Zur Funktionskontrolle des Meldeausgangs 27 wird das ausgelesene Meldesignal in beide Rechnereinheiten 20, 21 rückgelesen. Die in die Rechnereinheiten 20, 21 rückgelesenen Meldesignale bilden Istwerte, die mit den in den Rechnereinheiten 20, 21 gespeicherten Sollwerten verglichen werden. Hierzu sind die in Figur 3 mit V1, V2 bezeichneten Vergleicher vorgesehen. Die Ausgänge der Vergleicher V1, V2 sind auf UND-Glieder U1, U2 geführt, wodurch die Ausgangssignale der Vergleicher logisch verknüpft werden. Die Ausgänge der UND-Glieder sind auf die Ausgangsstufen 24, 25 der Sicherheitsschaltausgänge 22, 23 geführt.

Falls die Istwerte mit den Sollwerten übereinstimmen, wird das Meldesignal beispielsweise an eine nicht dargestellte Sicherheitssteuerung ausgegeben, die von einer SPS-Steuerung oder dergleichen gebildet ist. In Abhängigkeit des Schaltzustands steuert die Sicherheitssteuerung beispielsweise eine Funktion des Arbeitsgeräts oder eine dem Arbeitsgerät zugeordnete Bedieneinheit oder dergleichen.

Falls in einer der beiden Rechnereinheiten 20, 21 eine Abweichung der Istwerte von den Sollwerten festgestellt wird, erfolgt über die Auswerteeinheit 13, insbesondere die Schaltungsanordnung mit den Vergleichern V1, V2 und der UND-Gliedern U1, U2, die Generierung eines Deaktivierungssignals, welches verhindert, dass infolge des fehlerhaften Meldesignals Fehlfunktionen ausgelöst werden. Durch das Rücklesen der Meldesignale in die Rechnereinheiten 20, 21 und die darauf folgende Generierung des Deaktivierungssignals wird eine sichere Ausgabe der Meldesignale gewährleistet.

Im vorliegenden Fall werden die Sicherheitsschaltausgänge 22, 23 zur Erfüllung des zu erzielenden Sicherheitsniveaus des Meldeausgangs 27 herangezogen.

Hierzu wird wenigstens der Schaltzustand eines Sicherheitsschaltausgangs 22, 23 auf "low" gesetzt, falls die Istwerte mit den Sollwerten in den Vergleichern V1, V2 nicht übereinstimmen. Dadurch geht das Gesamtsystem in den sicheren Zustand über, da das Arbeitsgerät abgeschaltet wird.

Zudem werden in der Auswerteeinheit 13 die Schaltzustände der Schaltsignale der Sicherheitsschaltausgänge 22, 23 und des Meldesignals mit einer UND-Verknüpfung zur Generierung eines Deaktivierungssignals verknüpft.

Gemäß dieser logischen Verknüpfung liegt ein gültiges Meldesignal nur dann vor, wenn die Schaltsignale jeweils den Schaltzustand "high" aufweisen.

Diese Verknüpfung wird insbesondere auch in der an den optischen Sensor 1 angeschlossenen Sicherheitssteuerung ausgewertet. Durch Auswertung der Verknüpfung kann dort sofort erkannt werden, ob ein gültiges oder ungültiges Meldesignal eingelesen wurde.

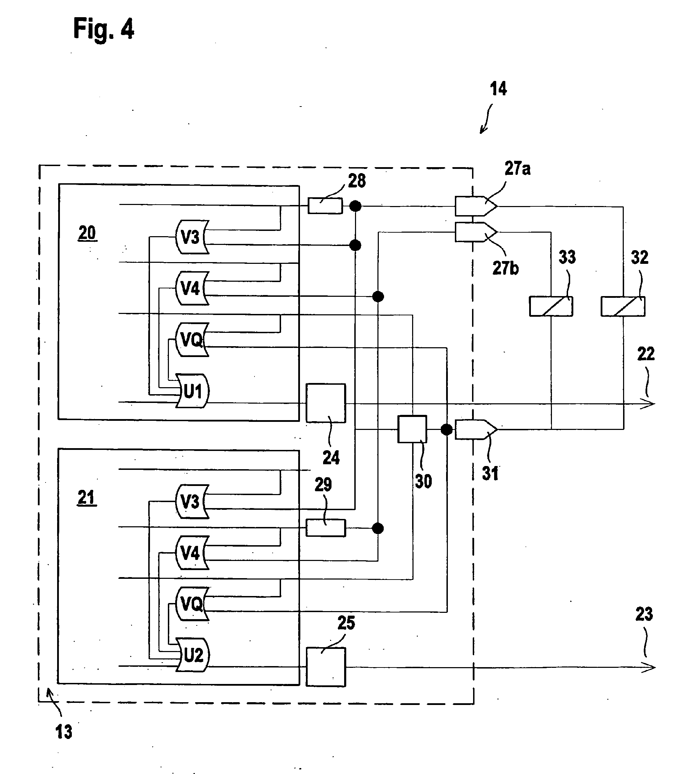

Figur 4 zeigt ein zweites Ausführungsbeispiel einer Ausgangsschaltung 14. Die dieser zugeordnete Auswerteeinheit 13 weist wiederum zwei Rechnereinheiten 20, 21 mit jeweils einem über eine Ausgangsstufe 24, 25 angeschlossenen Sicherheitsschaltausgang 22, 23 zur Ausgabe des Schaltsignals auf.

Im vorliegenden Fall ist an jeweils eine der Rechnereinheiten 20, 21 über jeweils einen High-Side-Treiber 28, 29 ein Meldeausgang 27a, 27b angeschlossen. Die High-Side-Treiber 28, 29 sind identisch ausgebildet und bestehen im einfachsten Fall aus einem Transistor. Die Meldeausgänge 27a, 27b entsprechen in ihrem Aufbau dem Meldeausgang 27 gemäß Figur 3.

Weiterhin ist an die Rechnereinheiten 20, 21 über einen Low-Side-Treiber 30 ein weiterer Ausgang 31 angeschlossen. Während bei den Meldeausgängen 27a, 27b zur Generierung der Meldesignale ein Schalten gegen ein vorgegebenes Bezugspotential erfolgt, erfolgt zur Generierung von binären Ausgangssignalen am Ausgang 31 ein Schalten gegen Massepotential. Der Ausgang 31 bildet somit einen gemeinsamen Masseanschluss für die beiden Meldeausgänge 27a, 27b oder generell sämtliche Meldeausgänge, falls die Anordnung gemäß Figur 4 auf mehrere Meldeausgänge erweitert wird.

Wie aus Figur 4 ersichtlich ist der erste Meldeausgang 27a über ein erstes Schaltelement 32 an den Ausgang 31 angeschlossen. Entsprechend ist der zweite Meldeausgang 27b über ein zweites Schaltelement 33 an den Ausgang 31 angeschlossen. Die Schaltelemente 32, 33 sind im vorliegenden Fall jeweils von einem Relais gebildet. Mit den Relais wird beispielsweise jeweils das Öffnen einer Tür gesteuert, wobei die Türen jeweils ein dem Arbeitsgerät zugeordnetes Bedienelement bilden.

Durch die Schaltungsanordnung gemäß Figur 4 ist gewährleistet, dass jedes Relais nur dann anzieht und damit die zugeordnete Tür steuert, wenn gleichzeitig der zugeordnete Meldeausgang 27a, 27b und der Ausgang 31 aktiviert ist, das heißt einen Schaltbefehl an das Relais sendet, wobei dieser von einem vorgegebenen Schaltzustand des Meldesignals am Meldeausgang 27a, 27b beziehungsweise des binären Ausgangssignals am Ausgang 31 gebildet ist.

Die Funktion der Anordnung gemäß Figur 4 entspricht weitgehend der Funktion der Anordnung gemäß Figur 3. Dementsprechend werden wiederum in beiden Rechnereinheiten 20, 21 die Schaltzustände der Meldeausgänge 27a, 27b berechnet und als Sollwerte abgespeichert. Dann werden wiederum für jeden Meldeausgang 27a, 27b die Meldesignale nur über eine Rechnereinheit 20 ausgegeben, jedoch als Istwerte in beide Rechnereinheiten 20, 21 für den dort durchzuführenden Sollwertvergleich rückgelesen. Für den Vergleich der Istwerte mit den Sollwerten sind in den beiden Rechnereinheiten 20, 21 jeweils die Vergleicher V3, V4 vorgesehen.

In Erweiterung zu der Ausführungsform gemäß Figur 3 werden bei der Anordnung gemäß Figur 4 in beiden Rechnereinheiten 20, 21 auch die Ausgangssignale für den Ausgang 31 berechnet und als Sollwerte in den Rechnereinheiten 20, 21 gespeichert. Auch die über den Ausgang 31 ausgegebenen Ausgangssignale werden als weitere Istwerte in die Rechnereinheiten 20, 21 rückgelesen und dort mittels der Vergleicher VQ mit den jeweiligen Sollwerten verglichen.

Die Ausgänge sämtlicher Vergleicher V3, V4, VQ einer Rechnereinheit 20 oder 21 werden auf ein UND-Glied 20, 21 geführt, um die Ausgangssignale der Vergleicher V3, V4, VQ logisch zu knüpfen.

Im fehlerfreien Fall stimmen sämtliche Istwerte mit den entsprechenden Sollwerten überein. In diesem Fall liegen gültige Melde- und Ausgangssignale vor, so dass bei gleichzeitiger Aktivierung eines Meldeausgangs 27a, 27b und des Ausgangs 31 das zugeordnete Relais anzieht und die entsprechende Türsteuerung aktiviert.

Falls in wenigstens einer Rechnereinheit 20, 21 eine Abweichung wenigstens eines Istwerts von einem Sollwert registriert wird, wird in der Auswerteeinheit 13 wiederum ein Deaktivierungssignal generiert.

Im einfachsten Fall kann das Deaktivierungssignal als Abschaltbefehl für den Meldeausgang 27a, 27b, an welchem ein fehlerhaftes Meldesignal erkannt wurde, ausgebildet sein. Durch dieses Deaktivierungssignal wird bewirkt, dass nur das dem jeweiligen Meldesignal zugeordnete Relais abfällt, wodurch die diesem Relais zugeordnete Türsteuerung in den sicheren Zustand übergeht.

Alternativ kann das Deaktivierungssignal als Abschaltbefehl für den Ausgang 31 ausgebildet sein, wodurch alle Relais abfallen und sämtliche Türsteuerungen in den sicheren Zustand übergehen.

Schließlich kann das Deaktivierungssignal auch derart ausgebildet sein, dass wenigstens ein Sicherheitsschaltausgang 22, 23 abgeschaltet wird, das heißt dessen Schaltsignal in den Schaltzustand "low" versetzt wird, wodurch das Arbeitsgerät abgeschaltet wird.

Schließlich kann auch eine stufenweise Generierung mehrerer Deaktivierungssignale erfolgen.

Dabei wird vorzugsweise zunächst ein Deaktivierungssignal generiert, welches den Meldeausgang 27a, 27b abschaltet, an welchem ein fehlerhaftes Meldesignal registriert wurde. Schlägt diese Abschaltung fehl, wird ein weiteres Deaktivierungssignal generiert, durch welches der Ausgang 31 abgeschaltet wird. Schlägt auch diese Abschaltung fehl, so wird ein weiteres Deaktivierungssignal generiert, mit welchem wenigstens ein Sicherheitsschaltausgang 22, 23 und damit das Arbeitsgerät abgeschaltet wird.

### Bezugszeichenliste

- (1): Optischer Sensor
- (2): Sendereinheit
- (3): Empfängereinheit
- (4): Überwachungsbereich
- (5): Sendelichtstrahlen
- (6): Sender
- (7): Erstes Gehäuse
- (8): Fenster
- (9): Sendersteuereinheit
- (10): Empfänger
- (11): Zweites Gehäuse
- (12): Zweites Fenster
- (13): Auswerteeinheit
- (14): Ausgangsschaltung
- (15): Empfangslichtstrahlen
- (16): Gehäuse
- (17): Fenster
- (18): Ablenkeinheit
- (19): Spiegel
- (20): Rechnereinheit
- (21): Rechnereinheit
- (22): Sicherheitsschaltausgang
- (23): Sicherheitsschaltausgang
- (24): Ausgangsstufe
- (25): Ausgangsstufe
- (26): Ausgangstreiber
- (27): Meldeausgang
- (27a): Meldeausgang
- (27b): Meldeausgang
- (28): High-Side-Treiber
- (29): High-Side-Treiber
- (30): Low-Side-Treiber
- (31): Ausgang
- (32): Erstes Schaltelement
- (33): Zweites Schaltelement

- D: Drehachse
- U1: UND-Glied
- U2: UND-Glied
- V1: Vergleicher
- V2: Vergleicher
- V3: Vergleicher
- V4: Vergleicher
- VQ: Vergleicher

## Patentansprüche

1. Optischer Sensor zur Erfassung von Objekten in einem Überwachungsbereich mit wenigstens einem Sendelichtstrahlen emittierenden Sender, wenigstens einem Empfangslichtstrahlen empfangenden Empfänger und mit einer Auswerteeinheit, in welcher in Abhängigkeit der Empfangssignale am Ausgang des Empfängers ein Schaltsignal generiert wird, welches über wenigstens einen Sicherheitsschaltausgang zur Steuerung eines Arbeitsgerätes ausgegeben wird, **dadurch gekennzeichnet, dass** in der Auswerteeinheit (13) wenigstens ein Meldesignal generiert wird, an wenigstens einen einkanaligen Meldeausgang (27) ausgelesen und über diesen ausgegeben wird, dass das Meldesignal in die Auswerteeinheit (13) rückgelesen und dort mit vorgegebenen Sollwerten verglichen wird, und dass bei einer Abweichung der Istwerte von den Sollwerten in der Auswerteeinheit (13) ein Deaktivierungssignal für den Sicherheitsschaltausgang (22) und den Meldeausgang (27) generiert wird, oder dass das Deaktivierungssignal als Abschaltbefehl für den Meldeausgang (27a, 27b) und einen Ausgang (31) ausgebildet ist, wobei der Ausgang (31) einen gemeinsamen Masseanschluss für den oder jeden Meldeausgang bildet.

2. Optischer Sensor nach Anspruch 1, **dadurch gekennzeichnet, dass** die Auswerteeinheit (13) wenigstens zwei Rechnereinheiten (20, 21) aufweist, wobei in diesen das Meldesignal generiert wird, welches von einer Rechnereinheit (20) an den einkanaligen Meldeausgang (27) ausgelesen, in beide Rechnereinheiten (20, 21) rückgelesen und dort mit vorgegebenen Sollwerten verglichen wird, wobei bei einer Abweichung der Istwerte von den Sollwerten in der Auswerteeinheit (13) das Deaktivierungssignal für den Sicherheitsschaltausgang (22) und / oder den Meldeausgang (27) generiert wird.

3. Optischer Sensor nach einem der Ansprüche 1 oder 2, **dadurch gekennzeichnet, dass** der Sicherheitsschaltausgang (22) einkanalig oder zweikanalig ausgebildet ist.

4. Optischer Sensor nach einem der Ansprüche 2 oder 3, **dadurch gekennzeichnet, dass** dieser zwei Sicherheitsschaltausgänge (22, 23) aufweist, wobei an jede Rechnereinheit (20, 21) jeweils ein Sicherheitsschaltausgang (22, 23) angeschlossen ist.

5. Optischer Sensor nach einem der Ansprüche 1 - 4, **dadurch gekennzeichnet, dass** das Schaltsignal, welches über den oder einen Sicherheitsschaltausgang (22, 23) ausgegeben wird, zwei Schaltzustände "low" und "high" aufweist, wobei das Schaltsignal den Schaltzustand "high" nur bei freiem Überwachungsbereich (4) einnimmt, und wobei das Arbeitsgerät nur dann in Betrieb gesetzt ist, wenn das Schaltsignal des oder jedes Sicherheitsschaltausgangs (22, 23) den Schaltzustand "high" einnimmt.

6. Optischer Sensor nach Anspruch 5, **dadurch gekennzeichnet, dass** durch das in der Auswerteeinheit (13) generierte Deaktivierungssignal das Schaltsignal des oder wenigstens eines Sicherheitsschaltausgangs (22,23) in den Schaltzustand "low" gesetzt wird.

7. Optischer Sensor nach einem der Ansprüche 1 - 6, **dadurch gekennzeichnet, dass** über den Meldeausgang (27) ein binäres Meldesignal ausgegeben wird.

8. Optischer Sensor nach Anspruch 7, **dadurch gekennzeichnet, dass** die Schaltzustände des Meldesignals in der Auswerteeinheit (13) in Abhängigkeit der Empfangssignale des Empfängers (10) generiert werden.

9. Optischer Sensor nach einem der Ansprüche 1 - 8, **dadurch gekennzeichnet, dass** dieser mehrere Meldeausgänge (27a, 27b) aufweist, welche jeweils an eine Rechnereinheit (20, 21) der Auswerteeinheit (13) angeschlossen sind, wobei über die Meldeausgänge (27a, 27b) unterschiedliche Meldesignale ausgegeben werden.

10. Optischer Sensor nach einem der Ansprüche 7 - 9, **dadurch gekennzeichnet, dass** die Meldesignale in eine Sicherheitssteuerung einlesbar sind.

11. Optischer Sensor nach Anspruch 10, **dadurch gekennzeichnet, dass** mittels der Sicherheitssteuerung das Arbeitsgerät und/oder diesem zugeordnete Komponenten steuerbar sind.

12. Optischer Sensor nach einem der Ansprüche 1-11, **dadurch gekennzeichnet, dass** das oder jedes Meldesignal mit dem oder jedem Schaltsignal logisch verknüpft ist.

13. Optischer Sensor nach Anspruch 13, **dadurch gekennzeichnet, dass** ein gültiges Meldesignal nur dann vorliegt, wenn das oder jedes Schaltsignal den Schaltzustand "high" aufweist.

14. Optischer Sensor nach einem der Ansprüche 1 - 13, **dadurch gekennzeichnet, dass** jeder Meldeausgang (27a, 27b) über ein Schaltelement (32, 33) an den Ausgang (31) angeschlossen ist.

15. Optischer Sensor nach Anspruch 14, **dadurch gekennzeichnet, dass** das Schaltelement (32, 33) von einem Relais gebildet ist.

16. Optischer Sensor nach einem der Ansprüche 14 oder 15, **dadurch gekennzeichnet, dass** das Schaltelement (32, 33) nur dann aktiviert ist, wenn sowohl der zugeordnete Meldeausgang (27a, 27b) als auch der Ausgang (31) einen einem Einschaltbefehl entsprechenden Schaltzustand aufweist.

17. Optischer Sensor nach einem der Ansprüche 1 - 16, **dadurch gekennzeichnet, dass** dieser als Lichtgitter oder als Flächendistanzsensor ausgebildet ist.

## Claims

1. Optical sensor for detecting objects in a monitoring region comprising at least one transmitter emitting transmitted light beams, at last one receiver receiving received light beams and an evaluating unit in which a switching signal is generated in dependence on the received signals at the output of the receiver, the switching signal being issued by way of at least one safety switching output for control of a working apparatus, **characterised in that** at least one reporting signal is generated in the evaluating unit (13) and is read out at at least one single-channel reporting output (27) and issued by way of this, that the reporting signal is read back into the evaluating unit (13) and compared there with predetermined target values, and that in the case of a difference of the actual values from the target values a deactivation signal for the safety switching output (22) and the reporting output (27) is generated in the evaluating unit (13) or that the deactivation signal is formed as a switch-off command for the reporting output (27a, 27b) and an output (31), wherein the output (31) forms a common ground connection for the or each reporting output.

2. Optical sensor according to claim 1, **characterised in that** the evaluating unit (13) comprises at least two computer units (20, 21), wherein the reporting signal is generated in these and is read out from one computer unit (20) at the single-channel reporting output (27), read back into the two computer units (20, 21) and compared there with predetermined target values, wherein in the case of a difference of the actual values from the target values in the evaluating unit (13) the deactivation signal for the safety switching output (22) and/or the reporting output (27) is generated.

3. Optical sensor according to one of claims 1 and 2, **characterised in that** the safety switching output (22) is of single-channel or double-channel construction.

4. Optical sensor according to one of claims 2 and 3, **characterised in that** this has two safety switching outputs (22, 23), wherein a respective safety switching output (22, 23) is connected with each computer unit (20, 21).

5. Optical sensor according to any one of claims 1 to 4, **characterised in that** the switching signal issued by way of the or a safety switching output (22, 23) has two switching states of 'low' and 'high', wherein the switching signal adopts the switching state 'high' only when the monitoring region (4) is free and wherein the working apparatus is placed in operation only when the switching signal of the or each safety switching output (22, 23) adopts the switching state 'high'.

6. Optical sensor according to claim 5, **characterised in that** the switching signal of the or at least one safety switching output (22, 23) is placed in the switching state 'low' by the deactivation signal generated in the evaluating unit (13).

7. Optical sensor according to any one of claims 1 to 6, **characterised in that** a binary reporting signal is issued by way of the reporting output (27).

8. Optical sensor according to claim 7, **characterised in that** the switching states of the reporting signal are generated in the evaluating unit (13) in dependence on the received signals of the receiver (10).

9. Optical sensor according to any one of claims 1 to 8, **characterised in that** this comprises a plurality of reporting outputs (27a, 27b), which are each connected with a respective computer unit (20, 21) of the evaluating unit (13), wherein different reporting signals are issued by way of the reporting outputs (27a, 27b).

10. Optical sensor according to any one of claims 7 to 9, **characterised in that** the reporting signals can be read into a safety control.

11. Optical sensor according to claim 10, **characterised in that** the working apparatus and/or components associated therewith is or are controllable by means of the safety control.

12. Optical sensor according to any one of claims 1 to 11, **characterised in that** the or each reporting signal is logically linked with the or each switching signal.

13. Optical sensor according to claim 13, **characterised in that** a valid reporting signal is present only if the or each switching signal has the switching state 'high'.

14. Optical sensor according to any one of claims 1 to 13, **characterised in that** each reporting output (27a, 27b) is connected with the output (31) by way of a switching element (32, 33).

15. Optical sensor according to claim 14, **characterised in that** the switching element (32, 33) is formed by a relay.

16. Optical sensor according to one of claims 14 and 15, **characterised in that** the switching element (32, 33) is activated only when both the associated reporting output (27a, 27b) and the output (31) have a switching state corresponding with a switch-on command.

17. Optical sensor according to any one of claims 1 to 16, **characterised in that** this is constructed as a light grating or as an area distance sensor.

## Revendications

1. Capteur optique pour la détection d'objets dans une zone de surveillance, comprenant au moins un émetteur émettant des rayons lumineux d'émission, au moins un récepteur recevant des rayons lumineux de réception et une unité d'évaluation dans laquelle un signal de commutation est généré en fonction des signaux de réception à la sortie du récepteur, lequel signal de commutation est délivré par au moins une sortie de commutation de sécurité pour commander un outil de travail, **caractérisé en ce qu'**au moins un signal de signalisation est généré dans l'unité d'évaluation (13), fourni à au moins une sortie de signalisation monocanal (27) et délivré via celle-ci, que le signal de signalisation est relu dans l'unité d'évaluation (13) et comparé dans celle-ci avec des valeurs de consigne prédéfinies, et qu'en cas d'écart entre les valeurs réelles et les valeurs de consigne, un signal de désactivation pour la sortie de commutation de sécurité (22) et la sortie de signalisation (27) est généré dans l'unité d'évaluation (13), ou que le signal de désactivation se présente sous la forme d'une instruction de mise hors circuit pour la sortie de signalisation (27a, 27b) et une sortie (31), la sortie (31) formant une connexion de masse commune pour la ou chaque sortie de signalisation.

2. Capteur optique selon la revendication 1, **caractérisé en ce que** l'unité d'évaluation (13) présente au moins deux unités de calcul (20, 21) dans lesquelles est généré le signal de signalisation, lequel est fourni par une unité de calcul (20) à la sortie de signalisation monocanal (27), relu dans les deux unités de calcul (20, 21) et comparé dans celles-ci avec des valeurs de consigne prédéfinies, le signal de désactivation pour la sortie de commutation de sécurité (22) et/ou la sortie de signalisation (27) étant généré dans l'unité d'évaluation (13) en cas d'écart entre les valeurs réelles et les valeurs de consigne.

3. Capteur optique selon une des revendications 1 ou 2, **caractérisé en ce que** la sortie de commutation de sécurité (22) est réalisée sous la forme d'une sortie monocanal ou bicanal.

4. Capteur optique selon une des revendications 2 ou 3, **caractérisé en ce que** celui-ci présente deux sorties de commutation de sécurité (22, 23), une sortie de commutation de sécurité (22, 23) étant connectée chaque fois à une unité de calcul (20,21).

5. Capteur optique selon une des revendications 1 à 4, **caractérisé en ce que** le signal de commutation qui est délivré via la ou une sortie de commutation de sécurité (22, 23) présente deux états de commutation « low » (ou bas) et « high » (ou haut), le signal de commutation ne prenant l'état de commutation « high » que si la zone de surveillance (4) est libre et l'outil de travail n'étant mis en service que si le signal de commutation du ou de chaque sortie de commutation de sécurité (22, 23) prend l'état de commutation « high ».

6. Capteur optique selon la revendication 5, **caractérisé en ce que** le signal de commutation du ou d'au moins une sortie de commutation de sécurité (22, 23) est mis dans l'état de commutation « low » par le signal de désactivation généré dans l'unité d'évaluation (13).

7. Capteur optique selon une des revendications 1 à 6, **caractérisé en ce qu'**un signal de signalisation binaire est délivré via la sortie de signalisation (27).

8. Capteur optique selon la revendication 7, **caractérisé en ce que** les états de commutation du signal de signalisation sont générés dans l'unité d'évaluation (13) en fonction des signaux de réception du récepteur (10).

9. Capteur optique selon une des revendications 1 à 8, **caractérisé en ce que** celui-ci présente plusieurs sorties de signalisation (27a, 27b) qui sont connectées chacune à une unité de calcul (20, 21) de l'unité d'évaluation (13), des signaux de signalisation différents étant délivrés via les sorties de signalisation (27a, 27b).

10. Capteur optique selon une des revendications 7 à 9, **caractérisé en ce que** les signaux de signalisation peuvent être lus dans une commande de sécurité.

11. Capteur optique selon la revendication 10, **caractérisé en ce que** la commande de sécurité permet de commander l'outil de travail et/ou des composants associés à celui-ci.

12. Capteur optique selon une des revendications 1 à 11, **caractérisé en ce que** le ou chaque signal de signalisation est combiné logiquement avec le ou chaque signal de commutation.

13. Capteur optique selon la revendication 13, **caractérisé en ce qu'**un signal de signalisation valide n'est présent que si le ou chaque signal de commutation présente l'état de commutation « high ».

14. Capteur optique selon une des revendications 1 à 13, **caractérisé en ce que** chaque sortie de signalisation (27a, 27b) est connectée à la sortie (31) via un élément de commutation (32, 33).

15. Capteur optique selon la revendication 14, **caractérisé en ce que** l'élément de commutation (32, 33) est formé par un relais.

16. Capteur optique selon une des revendications 14 ou 15, **caractérisé en ce que** l'élément de commutation (32, 33) n'est activé que si aussi bien la sortie de signalisation (27a, 27b) associée que la sortie (31) présente un état de commutation correspondant à une instruction de mise en circuit.

17. Capteur optique selon une des revendications 1 à 16, **caractérisé en ce que** celui-ci est réalisé sous la forme d'une barrière lumineuse ou d'un capteur de distance de surface.
